Europäisches Patentamt

European Patent Office

Office européen des brevets

(11) Veröffentlichungsnummer: **0 195 307**
**A2**

## (12) EUROPÄISCHE PATENTANMELDUNG

(21) Anmeldenummer: **86102838.9**

(22) Anmeldetag: **04.03.86**

(51) Int. Cl.⁴: **C 11 D 3/06**

(30) Priorität: **18.03.85 DE 3509661**

(43) Veröffentlichungstag der Anmeldung:
**24.09.86 Patentblatt 86/39**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Klee, Helmut, Dr.**
**Gartenstrasse 8**
**D-5030 Hürth(DE)**

(72) Erfinder: **Haas, Hans, Dr.**
**Am Bünnagelring 17**
**D-5357 Swisttal(DE)**

(72) Erfinder: **Kowalski, Werner**
**Am Ginsterberg 7**
**D-5354 Weilerswist(DE)**

(72) Erfinder: **Dahmen, Theo**
**Von-Westerburg-Strasse 24**
**D-5040 Brühl(DE)**

(54) Verfahren zur Herstellung eines körnigen, Natriumtriphosphat enthaltenden Produktes.

(57) Zur Herstellung eines wasserhaltigen, gekörnten, zur Verwendung in Wasch- und Geschirrspülmitteln geeigneten Produktes, das ganz oder teilweise aus Natriumtriphosphat besteht, wird feinpulvriges Natriumtriphosphat mit einem Wassergehalt von weniger als 22 Gew% kompaktiert, indem man das Ausgangsprodukt mit einer solchen Menge Wasser vermischt, die maximal zur 100 %igen Hydratisierung des Natriumtriphosphates zum Hexahydrat erforderlich ist, und dann das Gemisch kontinuierlich einer Zone zuführt, in der es unter Druck zu einem Festkörper geformt wird.

Verfahren zur Herstellung eines körnigen, Natriumtriphosphat enthaltenden Produktes

Die vorliegende Erfindung betrifft ein Verfahren zur Herstellung eines wasserhaltigen, gekörnten und zur Verwendung
in Wasch- und Geschirrspülmitteln geeigneten Produktes, das
ganz oder teilweise aus Natriumtriphosphat besteht.

Solche körnigen Produkte, gewöhnlich als Granulate bezeichnet, gewinnen für Herstellung von Geschirrspülmitteln, daneben aber auch für andere Wasch- und Reinigungsmittel in
zunehmendem Maße an Bedeutung.

Im allgemeinen sollen diese Produkte folgende Eigenschaften
aufweisen:

1. Schüttgewichte zwischen 7oo und 11oo g/l
2. Wassergehalte des Phosphats, je nach Verwendungszweck,
   bis zu 22 Gew%
3. Sie dürfen beim Einspülen in die Geschirrspül- oder
   Waschautomaten weder verklumpen noch verkleben.
4. Sie sollen eine hohe Kornstabilität besitzen.
5. Sie sollen im Gemisch mit den übrigen Wasch- und Geschirrspülmittelkomponenten, insbesondere mit chlorabspaltenden Substanzen, dauerhaft lagerfähig sein,
   ohne diese Komponenten zu zersetzen.

Wie schon aus der Bezeichnung "Granulate hervorgeht, wurden
diese Produkte bislang ausschließlich nach Granulierverfahren mit Hilfe von Granuliertellern, -trommeln, Sprühmischern und Sprühknetern oder vergleichbaren Apparaturen unter Verwendung von Wasser (beispielsweise auch in Form von Lösungen oder Suspensionen von Phosphaten, Silikaten, Sulfaten, waschaktiven Substanzen usw.) als Granulierhilfsmittel hergestellt.

Bei all diesen Granulierprozessen findet beim Aufbringen des Wassers oder der wäßrigen Lösungen bzw. Suspensionen eine Hydratisierung des Natriumtriphosphates zum entsprechenden Hexahydrat statt. Diese Kristallwasserbindung tritt in Abhängigkeit vom Gehalt des Natriumtriphosphates an seiner Hochtemperaturmodifikation, an Pyrophosphat usw. sowie von der Kornstruktur des Materials mehr oder weniger rasch ein.

Ein Nachteil der durch Granulation erzeugten gekörnten Produkte ist die häufig unvollständige Bindung des aufgebrachten Wassers als Hexahydrat. Je nach den oben genannten Eigenschaften des Materials kann mehr oder weniger Wasser lediglich als Oberflächenwasser vorhanden sein. Der Grund liegt darin, daß das Phosphat zu Agglomeraten, die nur an der Oberfläche Wasser aufgenommen haben, verkrustet. Dadurch wird verhindert, daß weiteres Wasser ins Innere des Agglomerates eindringt und dort als Kristallwasser gebunden wird.

Nicht vollständig als Hexahydrat gebundenes Wasser verursacht bei der Lagerung des Materials Klumpen und mindert die Chlorstabilität. Außerdem wird das Löseverhalten dadurch in unerwünschter Weise beeinflußt. So können beim Einspülen in die Spül- oder Waschmaschine Klumpen auftreten, die den Vorgang erschweren oder gar unmöglich machen.

Ferner liegen die Litergewichte der nach Granulier- oder Mischverfahren hergestellten körnigen Produkte in der Regel zwischen 500 und 700 g. Die meist benötigten höheren Schüttgewichte von ca. 1.000 g/l können auf diesem Wege praktisch nicht erreicht werden.

Außerdem ist die Kornhärte dieser Granulate durchweg unzureichend. Gerade die Kornhärte aber ist von großer Bedeutung. Die Produkte werden bei der Förderung, Lagerung und weiteren Verarbeitung in der Regel starken mechanischen Beanspruchungen ausgesetzt. Diese führen zu teilweiser Kornzerstörung und steigendem Staubanteil.

Überraschenderweise wurde nun gefunden, daß man die Nachteile der bekannten Arbeitsweisen überwinden und ein Produkt mit den eingangs beschriebenen Eigenschaften erhalten kann, wenn man feinpulvriges Natriumtriphosphat mit einem Wassergehalt von weniger als 22 Gew% allein oder im Gemisch mit mindestens einer der weiteren, ebenfalls feinpulvrigen Wasch- oder Geschirrspülmittelkomponenten kompaktiert, indem man das Ausgangsprodukt mit einer solchen Menge Wasser vermischt, die maximal zur 100 %igen Hydratisierung des Natriumtriphosphates zum Hexahydrat erforderlich ist, dann das Gemisch kontinuierlich einer Zone zuführt, in der es zwischen zwei sich zueinander im entgegengesetzten Sinn drehenden Körpern unter Druck zu einem Festkörper geformt wird, und man diesen Festkörper anschließend auf eine gewünschte Korngröße bricht, die vom Unter- und Überkorn abgetrennt wird.

Als Ausgangsprodukt ist vor allem ein Natriumtriphosphat geeignet, das einen Phase-I-Gehalt bis zu 100 Gew% und/oder einen Kristallwassergehalt von weniger als 5,0 Gew%, vorzugsweise von 0,1 bis 0,5 %, aufweist, während gegebenenfalls als weitere feinpulvrige Wasch- oder Geschirrspülmittelkomponenten die für diese Zwecke an sich üblichen Stoffe wie insbesondere Natriumsulfat, Natriummetasilikat, Zeolithe und Alkalisalze der Dichlorisozyanursäure eingesetzt werden können. Die feinpulvrigen Ausgangsprodukte können mit einer Korngröße kleiner als 0,3 mm eingesetzt werden. Vorzugsweise wird das Kompaktieren der Ausgangsprodukte in einer Walzenpresse vorgenommen, wobei es sich empfiehlt, die Spaltbreite zwischen den Walzen auf 0,2 bis 2,9 mm und einen Lineardruck von 10.000 bis 20.000 kN pro cm Walzenlänge einzustellen.

Vorzugsweise wird das Vermischen des Wassers mit dem Natriumtriphosphat oder dem Gemisch aus dem Triphosphat und den anderen Wasch- oder Geschirrspülmittelkomponenten in einer für solche Zwecke an sich bekannten Mischeinrichtung, wie z.B. einer Trommel oder einem Prämixer, bis zur mindestens teilweise erfolgten Hydratisierung des Natriumtriphosphates vorgenommen.

Die Kompaktierung läßt sich in an sich bekannten und für andere Zwecke bereits vielfach benutzten Apparaturen durchführen.

Vorzugsweise arbeitet man mit einer Walzenpresse, indem man das trockene, mehr oder minder kristallwasserhaltige Ausgangsprodukt bzw. -gemisch zunächst zwischen zwei Walzen mit einstellbarem Preßdruck zu einem Schulp verpreßt. Dieser Schulp wird anschließend auf die gewünschte Korngröße begrochen. Abgesiebtes Über- und Unterkorn werden dem Prozeß wieder zugeführt und neu verpreßt.

Walzenabstand und Aufgabenmenge müssen in Abhängigkeit vom notwendigen und aus Gründen der Kornstabilität gewünschten Anpreßdruck so aufeinander abgestimmt werden, daß die erzielte Schulpdicke im Durchmesser etwa mit der Größe des nach dem Brechen gewünschten Korndurchmesser übereinstimmt. Man erhält so ein gleichmäßiges Korn und vermeidet Schuppen.

Zur Vermeidung von Randgängigkeit sollte das zu verpressende Gut möglich gleichmäßig auf die gesamte Walzenbreite aufgebracht werden.

Zum Brechen der Schulpe benutzt man zweckmäßigerweise einen Siebbrecher, bei dem die Preßstücke durch ein Sieb bestimmter Maschenweite hindurchgepreßt werden. Die Maschenweite des Siebes bestimmt dabei die Korngröße des Endproduktes.

Anschließend wird das gebrochene Material in geeigneten Schwingsieben herkömmlicher Bauart getrennt. Man erhält so ein weitgehend einheitlich gekörntes Fertigprodukt. Über- und Unterkorn der Siebstation werden dem Aufgabebunker vor der Presse zugeführt.

Bei der Herstellung von Gemischen des Natriumtriphosphates, mit z.B. Metasilikaten, Sulfaten usw. werden die Ausgangsprodukte zunächst in geeigneten Mischvorrichtungen, wie Schnecken, Trommeln o. ä. zusammengebracht und anschließend den Vorratsbunkern vor der Presse zugeführt.

Die nach einem solchen Verfahren hergestellten Produkte weisen eine stark verdichtete Oberfläche auf und verhalten sich beim Auflösen oder Aufschlämmen in Wasser so, daß keine Verklumpungen auftreten. Das nach dem Einbringen in Wasser "fischrogenartige" Material bleibt vielmehr zunächst weitgehend in seiner Struktur erhalten und kann leicht aus den Kammern der Wasch- oder Spülmaschinen ausgespült werden. Später zerfließt es zu einer breiigen Masse, die sich ohne Verklumpungen auflöst. Auch die Kornstabilität dieser Produkte ist erheblich höher als die der bisher bekannten Granulate.

Ferner ist in dem erfindungsgemäß hergestellten Produkt das darin enthaltene Wasser vollständig als Hexahydrat gebunden. Die durch den Preßdruck entstehende Wärme bringt nach dem Vermischen des Phosphates mit Wasser ggf. noch unvollständig gebundenes Wasser zur Verdampfung bzw. "preßt" es in das Korninnere hinein. Die Oberfläche des Festkörpers ist - abgesehen vom gebundenen Kristallwasser - völlig trocken. Die oben beschriebenen Nachteile der nach einem Granulierverfahren hergestellten Produkt besitzt dieses Material nicht.

Durch die nachfolgenden Beispiele sollen zur näheren Erläuterung der Erfindung, aber nicht zu deren Beschränkung, dienen. Die angeführten %-Angaben sind als Gewichts% zu verstehen.

Beispiel 1

5.000 kg techn. Natriumtriphosphat mit einem Gehalt von 91,8 % $Na_5P_3O_{10}$, 53 % Form I und 0,2 % Wasser werden in einer Prämix-Einrichtung, die mit auf vertikaler Welle angeordneten Drehflügeln versehen ist, mit 600 kg Wasser gemischt. Das feuchte und erwärmte Material gelangt in einen Zwischenbunker und von dort mit Hilfe von zwei Aufgabeschnecken in den Spalt zweier gegenläufig rotierender Walzen. Die Spaltbreite beträgt 1,8 mm; der Anpreßdruck wurde auf 16.000 KN pro cm Walzenlänge eingestellt. Aus dem Walzenspalt wurde ein Phosphatschulp ausgeworden, der beim Auftreffen auf ein darunterliegendes Förderband in leicht gebogene, markstück- bis handtellergroße Stücke zerbracht.

Die Preßschulpe wurde in einem Stachelbrecher geleitet, dort gebrochen und anschließend auf ein Doppeldecker-Schwinsieb mit 0,2 bzw. 1,2 mm Maschenweite gebracht.

Es fielen 3.240 kg körniges Natriumtriphosphat mit einer Korngröße von 0,2 bis 1,2 mm an. Die Ausbeute betrug (bezogen auf eingesetztes Phosphat-Wasser-Gemisch) 57,8 %. Der Rest des Materials wurde als Rückgut zum Aufgabebunker vor den Pressen zurückgeführt.

Der Wassergehalt des Produktes und des Rückgutes betrug 8,5 %. Demnach waren 2,2 % des Wassers beim Mischvorgang bzw. beim Verpressen des Materials verdampft.

Das Fertigprodukt hatte folgende Siebanalyse:

| | |
|---|---|
| < 0,1 mm | 0,1 % |
| 0,1 - 0,2 mm | 0,3 % |
| 0,2 - 0,4 mm | 9,7 % |
| 0,4 - 0,74 mm | 50,4 % |
| 0,75 - 1,2 mm | 39,6 % |
| > 1,2 mm | 0,1 % |

Schüttgewicht:        1.060 g/l

Beim Einbringen von 10 g dieses Produktes in 500 ml Wasser blieb das Phosphat zunächst körnig und löste sich anschließend unter Rühren klar auf.

50 g des Materials wurden in einem Trommelzylinder von 1.000 ml Inhalt und 100 mm Ø gegeben. Anschließend wurden 4 Stahlkugeln von je 50 g Gewicht in die Trommel gebracht und diese Einrichtung 240 Sekunden lang mit 40 Upm rotieren lassen. Danach wurde das Phosphat aus der Trommel genommen und auf einem Sieb mit einer Maschenweite von 0,1 mm abgesiebt.

Der Feinanteil < 0,1 mm betrug 7,8 g. Unter den angegebenen Bedingungen betrug der Anteil an bruchfestem Material also 82,2 %.

Zum Vergleich wurden 50 g eines herkömmlichen, durch Granulation in einer Drehtrommel erzeugten Materials mit 9,2 % $H_2O$ und einem Schüttgewicht von 730 g/l ebenfalls dem oben beschriebenen Trommeltest unterzogen. Der Anteil an bruchfestem Material betrug hierbei 49,9 %.

Beispiel 2

5.000 kg Natriumtriphosphat mit einem Wassergehalt von 3,1 %, einem Form-I-Gehalt von 66,0 % und einem $Na_5P_3O_{10}$-Gehalt von 98,2 % wurden in einer Prämix-Einrichtung mit 1.280 kg Wasser gemischt und anschließend einer Walzenpresse zugeführt. Der Lineardruck an der Presse betrug 12.000 KN/cm; Spaltbreite 1,5 mm. Das Preßgut wurde anschließend gebrochen und auf einem Doppeldeckersieb mit einer Maschenweite von 0,2 bzw. 1,2 mm abgesiebt. Die Ausbeute an Fertigprodukt mit einer Korngröße von 0,2 - 1,2 mm betrug 66,2 %. Der Rest wurde als Rückgut wieder verarbeitet.

Siebanalyse:

| | |
|---|---|
| < 0,1 mm | 0,1 % |
| 0,1 - 0,2 mm | 0,4 % |
| 0,2 - 0,4 mm | 8,3 % |
| 0,4 - 0,75 mm | 49,6 % |
| 0,75 - 1,2 mm | 41,7 % |
| > 1,2 | < 0,1 % |

Schüttgewicht:      999 g/l

Der Wassergehalt des Fertigproduktes und des Rückgutes betrug 19,8 % und lag damit um 3,0 % unter dem gemäß der Wasseraufgabe zu erwartenden theoretischen Wert. Die Differenz ist auf die Wasserverdampfung während der Materialbehandlung zurückzuführen.

Beim Auflösen in Wasser blieb das Produkt zunächst körnig, zerfloß dann zu einem weichen Brei und löste sich anschließend klar auf.

Im Trommeltest wurde die Abriebfestigkeit bestimmt zu 86,4 %

Beispiel 3

3.000 kg Natriumtriphosphat mit 13 % Form I-Gehalt, 0,2 % $H_2O$ und 97,9 % $Na_5P_3O_{10}$ werden mit 2.000 kg technisch wasserfreiem Natriummetasilikat in einer Doppelpaddelmischschnecke miteinander vermischt und das Gemisch anschließend in einem Prämix mit 650 kg $H_2O$ gemischt.

Das Gemisch wurde anschließend in einer Walzenpresse mit einem Lineardruck von 18.000 KN/cm bei einer eingestellten Spaltbreite von 2 mm verpreßt. Anschließend wurde das Preßgut gebrochen und gesiebt. Das Doppelsieb hatte Maschenweite von 0,6 bzw. 1,6 mm.

Die Ausbeute an körnigem Fertigprodukt mit einer Korngröße von 0,6 - 1,6 mm betrug 3.940 kg, das sind bezogen auf das insgesamt eingesetzte Material (einschließlich $H_2O$) 69,7 %.

Siebanalyse:

| | |
|---|---|
| < 0,4 mm | < 0,1 % |
| 0,4 - 0,74 mm | 21,6 % |
| 0,75 - 1,2 mm | 43,2 % |
| 1,2 - 1,6 mm | 35,2 % |
| >1,6 mm | < 0,1 % |

Schüttgewicht: 1.005 g/l

Der Wassergehalt des Produktes betrug 9,1 %.

Löseverhalten: Beim Einbringen in Wasser zerfließt das Produkt zu einem Brei, der sich zu einer durch Silicat getrübten Flüssigkeit auflöst.

Die Abriebfestigkeit betrug 86,6 %.

Beispiel 4

Es wurden Geschirreiniger nach folgenden Rezepturen zubereitet:

1    90 % Phosphat, erfindungsgemäß hergestellt nach Beispiel 1 mit 8,5 % $H_2O$

    5 % Soda

    2,5 % nichtionisches Tensid (2909 HoeS) 2,5 % Natriumdichlorisozyanurat

2    90 % Phosphat, erfindungsgemäß hergestellt nach Beispiel 2 mit 19 % $H_2O$

    5 % Soda

    2,5 % nichtionisches Tensid 2,5 % Na-dichlorisozyanurat

3    90 % Phosphat-Metasilikatgemisch, erfindungsgemäß hergestellt nach Beispiel 3 5 % Soda 2,5 % nichtionisches Tensid 2,5 % Natriumdichlorisozyanurat

4    90 % handelsübliches Phosphatgranulat mit 8 % $H_2O$

    5 % Soda

    2,5 % NiO-Tensid

    2,5 % Natriumdichlorisozyanurat

5    45 % handelsübliches Phosphatgranulat mit 8 % $H_2O$

    45 % Metasilikat (Simet AN) 5 % Soda 2,5 % NiO-Tensid 2,5 % Natriumdichlorisozyanurat

Diese Geschirrspülreiniger wurden unter im Handel üblichen Lagerbedingungen mehrere Monate lang aufbewahrt und der Abbau an aktivem Chlor in den Mischungen bestimmt.

Die Ergebnisse zeigt nachfolgende Tabelle:

TABELLE

| Formulierung | % Cl-Abbau nach Monaten | | | |
|---|---|---|---|---|
| | 1 | 2 | 3 | 6 |
| 1 | 1,2 | 9,3 | 12,2 | 24,3 |
| 2 | 3,3 | 10,8 | 11,5 | 26,5 |
| 3 | 1,8 | 10,0 | 12,2 | 26,5 |
| 4 | 6,3 | 12,2 | 20,8 | 41,5 |
| 5 | 8,6 | 13,8 | 19,3 | 37,5 |

HOECHST AKTIENGESELLSCHAFT                    HOE 85/H 011


Verfahren zur Herstellung eines körnigen, Natriumtriphosphat enthaltenden Produktes


Patentansprüche

1. Verfahren zur Herstellung eines wasserhaltigen, gekörnten,
   zur Verwendung in Wasch- und Geschirrspülmitteln geeigneten Produktes, das ganz oder teilweise aus Natriumtriphosphat besteht, dadurch gekennzeichnet, daß man feinpulvriges Natriumtriphosphat mit einem Wassergehalt von weniger
   als 22 Gew% allein oder im Gemisch mit mindestens einer
   der weiteren, ebenfalls feinpulvrigen Wasch- oder Geschirrspülmittelkomponenten kompaktiert, indem man das Ausgangsprodukt mit einer solchen Menge Wasser vermischt, die maximal zur 100 %igen Hydratisierung des Natriumtriphosphates zum Hexahydrat erforderlich ist, dann das Gemisch kontinuierlich einer Zone zuführt, in der es zwischen zwei
   sich zueinander im entgegengesetzten Sinn drehenden Körpern unter Druck zu einem Festkörper geformt wird, und
   man diesen Festkörper anschließend auf eine gewünschte
   Korngröße bricht, die vom Unter- und Überkorn abgetrennt
   wird.

2. Verfahren nach Anspruch 1, dadurch gekennzeichnet, daß man
   Natriumtriphosphat mit einem Phase-I-Gehalt bis zu 100 Gew%
   einsetzt.

3. Verfahren nach Anspruch 1 oder 2, dadurch gekennzeichnet,
   daß man ein Natriumtriphosphat mit einem Wassergehalt von
   weniger als 5,0 Gew% einsetzt.

4. Verfahren nach Anspruch 3, dadurch gekennzeichnet, daß man Natriumtriphosphat mit einem Kristallwassergehalt von 0,1 bis 0,5 Gew% einsetzt.

5. Verfahren nach einem der Ansprüche 1 bis 4, dadurch gekennzeichnet, daß man als weitere, feinpulvrige Wasch- oder Geschirrspülmittelkomponenten, Natriumsulfat, Natriummetasilikate, Zeolithe, Alkalisalze der Dichlorisozyanursäure oder andere für diese Zwecke bekannte Komponenten einsetzt.

6. Verfahren nach einem der Ansprüche 1 bis 5, dadurch gekennzeichnet, daß man die feinpulvrigen Ausgangsprodukte mit einer Korngröße kleiner als 0,3 mm einsetzt.

7. Verfahren nach einem der Ansprüche 1 bis 6, dadurch gekennzeichnet, daß man das Kompaktieren der Ausgangsprodukte in einer Walzenpresse vornimmt.

8. Verfahren nach Anspruch 7, dadurch gekennzeichnet, daß man Spaltbreite zwischen den Walzen auf 0,2 bis 2,0 mm einstellt.

9. Verfahren nach einem der Ansprüche 1 bis 8, dadurch gekennzeichnet, daß man die Ausgangsprodukte unter einem Lineardruck von 10.000 bis 20.000 kN pro cm Walzenlänge kompaktiert.

1o. Verfahren nach einem der Ansprüche 1 bis 9, dadurch gekennzeichnet, daß man das Vermischen des Wassers mit dem Natriumtriphosphat oder dem Gemisch aus dem Triphosphat und den anderen Wasch- oder Geschirrspülmittelkomponenten in einer für diese Zwecke an sich bekannten Mischeinrichtung bis zu einer mindestens teilweise erfolgten Hydratisierung des Natriumtriphosphates zum Hexahydrat vornimmt.